# EUROPEAN PATENT SPECIFICATION

(11) **EP 2 877 037 B1**
(45) Date of publication and mention of the grant of the patent: **24.04.2019**
(21) Application number: 13745956.6
(22) Date of filing: 24.07.2013
(51) Int. Cl.: A23L 29/219, A23G 3/40, A23G 3/34

(54) **QUICK-SETTING STARCH IN STARCH GUMS**
SCHNELLHÄRTENDE STÄRKE IN STÄRKEGUMMIS
AMIDON À PRISE RAPIDE DANS DES GOMMES EN AMIDON

(30) Priority: 25.07.2012 EP 12005401; 25.07.2012 EP 12005402
(43) Date of publication of application: 03.06.2015
(73) Proprietor: Cargill, Incorporated, Wayzata, MN 55391 (US)
(72) Inventor: BENOIT, Magalie Laure, B-1200 Brussels (BE); FONTEYN, Dirk, B-2820 Bonheiden (BE)
(74) Representative: Morariu Radu, Mihai Dorin
(86) International application number: PCT/US2013/051858
(87) International publication number: WO 2014/018655

(56) References cited:
- EP-A1- 0 679 340
- EP-A1- 0 730 828
- EP-A1- 0 970 616
- GB-A- 1 286 994
- US-A- 3 446 628
- US-A- 3 687 690
- US-A- 4 073 959
- US-A- 5 262 191
- US-A1- 2011 318 467

## Description

### FIELD OF THE INVENTION

The present invention relates to the use of acid-thinned tapioca starch in the manufacture of confectionery gums.

### BACKGROUND OF THE INVENTION

Starch gums are produced by heating a starch and sugars suspension, mixing the cooked mass with colour, taste, and other desirable ingredients and pouring the mixture at elevated temperature and high dry substance in a mould. The mixture is then allowed to dry and after cooling the gums are ready for use. Depending on the composition the gums are stored either as such or they are packaged, individually or together. Traditional gum production is extensively described in Sugar Confectionery Manufacture, ed. E.B. Jackson, Blackie & Son Ltd. Glasgow-London, 1st ed. 1990.

The critical factor as regards the production time of starch gums is the drying time in the mould. Drying takes in general from 12 hours, often more than 36 hours, even more than 48 hours and up to 60 hours. In order to obtain a suitable starch gum it is needed that the gum contains between about 78 and 90 % dry substance. Using the normally employed starches it is not possible to attain such a high dry substance due to viscosity problems. Therefore, in the normal process starches are introduced at a total dry substance of about 70 - 75%. After moulding the products are dried in drying chambers for up to 60 hours to attain the desired dry substance and for setting the starch. This means that large systems are needed, often in the form of drying chambers and a large amount of energy is used. After drying, the gums are allowed to cool which typically takes 12 hours or more. The drying and setting time combined of the starch gums in the mould is referred to as the total setting time. As such the process for obtaining starch gums is long. Different starch products have been developed to circumvent these problems.

Notably, high amylose starches are available for the preparation of starch gums. Although these starches confer to the mixture high gelling properties they are not usable at high dry substance and therefore they still require a long drying time.

US 3,446,628 describes congealed confections wherein the congealing agent is a thin-boiling amylose-containing cereal starch having a fluidity within the range of about 30 to about 80. Suitable starches include thin-boiling corn, sorghum and wheat starches modified to the 30 - 80 fluidity level as by acid or other means. It is further stated that most root starches (e.g. potato, tapioca) are inapplicable in gum confections, since for some obscure reason they do not give firm gels, despite the presence of an amylose component.

US 4,073,959 relates to improvements in making gelled confections containing potato starch. It has been found that tapioca starch whether or not it has been acid modified, cannot be used in the production of quick-setting gum confections. However, it has been found that potato starch can be used advantageously to produce gum confections that require use of a quick-gelling starch as congealing agent provided that it has been modified to give buel fluidity of about 20 to 70.

EP 0 970 616 describes quick setting starch comprising potato and tapioca dextrin.

EP0730828 discloses a starch-based composition suitable for use as a basis for sugar-free confectionery products. The composition comprises thinned, hydropropyl tapioca starch, gelatin and a suitable polyol.

EP0679340 discloses a composition suitable as replacement for gum arabic which comprises a mixture of thinned hydroxypropyl tapioca starch and enzymatically hydrolysed collagen.

US2011318467 discloses hydroxypropyl substituted starches as source of soluble fiber.

US5262191 discloses starch jelly sweets containing a blend of low viscosity low amylose starch and acid converted high amylose starch to give tail-free products.

GB1286994 discloses soft confectionery like gums, jellies with soft centres fruit slices containing a starch hydrolysate to reduce drying times.

There exists therefore a need for a quick-setting starch, which can be used at high dry substance. The present invention provides such a product.

### SUMMARY OF THE INVENTION

The present invention relates to the use of acid-thinned tapioca starch for the preparation of confectionery gums and to a quick-setting starch composition comprising acid-thinned tapioca starch.

Furthermore the present invention relates to a process for producing confectionery gums comprising preparing a composition of acid-thinned tapioca starch and at least one sweetener at elevated temperature, moulding the composition to obtain a gum and de-moulding the gum.

The present invention also relates to a confectionery gum containing acid-thinned tapioca starch.

Finally the use of acid-thinned tapioca starch is described for the manufacture of confectionery gums for improving the setting time of moulding.

### FIGURES

Figure 1 is a Brabender viscosity curve of a 35% d.s. starch slurry at pH as is (about 5) - wherein the starch slurry is acid-thinned tapioca starch prepared in examples 1 (L4) and 2 (L5).
Figure 2 is a Brabender viscosity curve of a 35% d.s. starch slurry at pH as is (about 5) - wherein the starch slurry is acid-thinned potato starch prepared in examples 3 (L1) and 4 (L2).
Figure 3 is a Brabender viscosity curve of a 35% d.s. starch slurry at pH as is (about 5) - wherein the starch slurry is acid-thinned corn starch prepared in example 5 (L1).

### DETAILED DESCRIPTION

The present invention relates to the use of acid-thinned tapioca starch for the preparation of confectionery gums and to a quick-setting starch composition comprising acid-thinned tapioca starch defined by the claims.

Acid-thinned starches are thin boiling starches, referring to their low hot paste viscosity. This low viscosity allows high solid sugar/starch solutions to be rapidly cooked and deposited while avoiding inclusions of air-bubbles and/or vapour bubbles. Thin boiled starches can be designated further by fluidity, the inverse of viscosity.

Acid-modified thin boiling starch is normally prepared by treatment of starch with hydrochloric acid. Usually hydrolyzed starches are produced when a concentrated suspension of starch is treated with acids, at temperatures lower than those of gelatinisation (30-60°C), during several hours. The acid hydrolysis diminishes the molar mass, increasing consequently the free aldehyde group content. It also decreases viscosity, increases the solubility of the cooked starch and minimizes syneresis. Usually acid-thinning is a slurry modification process wherein a washing step is included to remove by-products such as remaining chemicals, salts and the like and which may contribute to an off-taste. Unlike a dextrinisation process whereby dextrins are manufactured without washing steps.

Confectionery gum include hard gums, chewy gums, liquorice, jellies, pastilles, fruit pastes, jelly beans, gum drops, and inclusions for ice cream or pastries, or sweets of the same type but related to pharmaceuticals.

Quick-setting starch is a starch that allows a fast setting of confectionery gums of moulding. The total setting time (= drying time + cooling time) of the confectionery gum is less than 10 hours. Preferably the total setting time is less than 9 hours. A quick setting starch relates to a starch that has a thin hot viscosity and allows a quick gelling once it gets into a mould. The drying time is only 4 hours or less. Thus the de-moulding can be performed after very short time.

It was surprisingly found that acid-thinned tapioca starch is providing the quick setting properties suitable for the manufacture of confectionery gums.

The acid-thinned tapioca starch has:
a. a Brabender peak viscosity of maximum 350BU;
b. a Brabender hot paste viscosity at 95°C of maximum 250 BU; and
c. a Brabender end viscosity after cooling to 50°C of at least 1500BU.

In another embodiment, the acid-thinned starch comprises potato starch.

The potato starch has:
- a Brabender peak viscosity of maximum 350 BU, preferably less than 300 BU, even more preferably less than 250 BU;
- a Brabender hot paste viscosity at 95°C of maximum 250 BU, preferably below 200 BU;
- a Brabender end viscosity after cooling to 50°C of at least 1500 BU, preferably more than 2000 BU, and even more preferably more than 2500 BU.

### (Brabender conditions of 35% d.s., 350 cmg, pH as is, at about 5).

In another embodiment, the acid-thinned starch comprises corn starch. The acid-thinned corn starch has:
- a Brabender peak viscosity of maximum 1000 BU, preferably less than 850 BU;
- a Brabender hot paste viscosity at 95°C of maximum 2000 BU, preferably below 1800 BU, even more preferably below 1600 BU;
- a Brabender end viscosity after cooling to 50°C of at least 3000 BU, preferably more than 3500 BU, and even more preferably more than 3000 BU.

### (Brabender conditions of 35% d.s., 350 cmg, pH as is, at about 5 ; BU = Brabender Units).

These values ensure that there is acceptable viscosity development during the cooking of the gum mass (∼ peak viscosity), ensure that demoulding can be done easily without tailing (∼ hot paste viscosity) and that the obtained gum is sufficiently stable after the (shorter) total setting time (∼ end viscosity).

Furthermore it describes a process for producing confectionery gums comprising preparing a composition of the acid-thinned tapioca starch described hereinbefore and at least one sweetener at elevated temperature, moulding the composition to obtain a gum and de-moulding the gum. Moulding includes drying the gum and cooling the gum as described hereinbefore. Minor ingredients such as acid, food flavours, high intensity sweeteners, and/or colours can be added when appropriate. The elevated temperature is similar to existing processes wherein starch is used in the preparation of starch based gums. The premix temperature is from 55°C to 75°C, the cooking temperature is from 125°C to 135°C and the depositing temperature is from 80 to 90°C.

Usually the at least one sweetener is a mixture of glucose syrup and sucrose.

It further relates to a confectionery gum containing from 5 to 25% acid-thinned tapioca starch, preferably from 10% to 20% acid thinned tapioca starch. Preferably, the confectionery gum contains from 75% to 90% w/w dry substance. Practically, confectionery gums containing on commercial base 12% of the acid thinned starch and combined with gelatine can be prepared. Furthermore, confectionery gums containing on commercial base 17% acid-thinned tapioca starch can be prepared with good setting and without an off-taste.

Furthermore, the confectionery gum may comprise other texturising agents, preferably gelatine. Food-grade gelatine is made by aqueous extraction from fish or mammalian collagen such as pig and bovine. It results in a firm, gummy gel structure. Depending on the bloom strength (higher bloom strength giving a harder gel) and concentration, the texture of the confectionery product will be elastic to hard with a rubbery like chew.

The confectionery gum of the current invention may further comprise acid, high intensity sweeteners, flavours, and/or colouring agents.

Examples of flavours include flavours, and/or extracts and/or aromatic oils, essential oils derived from fruits and berries (e.g. Banana, raspberries, apple, mango, papaya, citrus and the like), vegetables (e.g.; cucumber, rhubarb, tomato, carrot, asparagus etc.), nuts (e.g. hazel nuts, almonds, pine nuts, cashew nuts, and the like), spices (e.g; basil, cardamom, cinnamon, thyme, and the like), flowers (e.g. Rose, elder flower, lavender, and the like), herbs (e.g. basil, rosemary, dill and the like), roots (e.g. liquorice), plants (e.g. vanilla, mint, fir, tea, and the like), as well as various other sources (e.g.; propolis, and honey). Flavours further more comprise ingredient flavours such as cocoa, chocolate, caramel, caramel essence, nougat, nougat essence, marzipan, almond essence, oils, liquor, brandy, rum, port, whiskey, wine and the like. Typical examples of flavours are selected from mint flavour, chocolate mint flavour, bubblegum flavour, apple spice flavour, black cherry flavour, pineapple flavour, cola flavour, grape flavour, cherry flavour, apple flavour and citrus flavours such as orange flavour, lemon flavour, lime flavour, fruit punch and mixtures of two or more thereof. The amount of flavour depends upon the flavour or flavours selected, the flavour impression desired and the form of flavour used.

If desired, colouring agents can also be added as well. Food colours are substances that are added to change colour or to obtain brightly and deliciously coloured products. People associate certain colours with certain flavours and the colour can influence the perceived flavour. For this reason, food manufacturers add dyes to the products. Any watersoluble colouring agent approved for food use can be utilized for the current invention. Natural colours extracted from e.g. plants, vegetables, fruits, and/or insects are preferred in connection with the current invention.

Furthermore, the confectionery gum, may comprise an edible acid. Suitable acids are selected from the group consisting of malic acid, fumaric acid, lactic acid, tartaric acid, glucono-delta lactone, salts of gluconic acid, phosphoric acid, succinic acid, adipic acid, ascorbic acid, acetic acid, citric acid and mixture of two or more thereof.

High intensity sweeteners may be added as well. A high-intensity sweetener, which can be used as non-nutritive sweetener can be selected from the group consisting of aspartame, acesulfame salts such as acesulfame-K, saccharins (e.g. sodium and calcium salts), cyclamates (e.g. sodium and calcium salts), sucralose, alitame, neotame, steviosides, glycyrrhizin, neohesperidin dihydrochalcone, monellin, thaumatin, brazzein, mixtures of two or more thereof, and the like.

Finally the use of acid-thinned tapioca starch is described for the manufacture of confectionery gums for improving the total setting time (= drying + cooling time) of moulding. The total setting time of moulding can be reduced to below 10 hours.

The invention will hereunder be illustrated in the form of the following examples.

### Examples

### Example 1

### Preparation of acid-thinned tapioca starch.

A 39% starch slurry of tapioca starch was prepared from 2297g tapioca starch and 2819g demineralized water.

On 2 kg dry matter (= 22 Baume = 39.9% d.s) at 45°C, 8% of HCl was added (= 432g of 37% solution). The reaction was continued for 6 hours.

Neutralization was done with NaOH (10%) until pH 5 was reached.

The product (L4) was filtered on Buchner filter. The starch cake is re-slurried with water to wash the starch, filtered again and dried to a moisture content of about 13%.

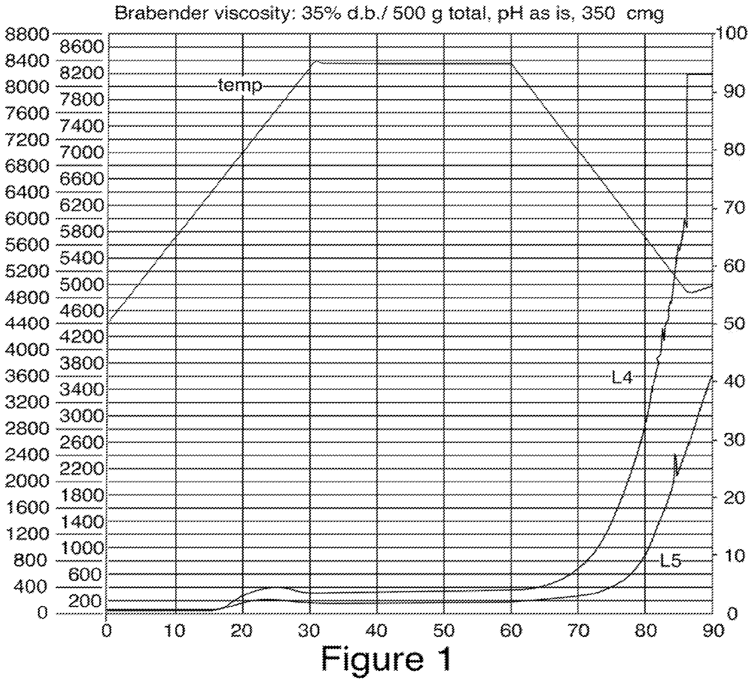

The product was characterized by Brabender viscograph (see figure 1).

### Example 2

### Preparation of acid-thinned tapioca starch.

A 39% starch slurry of tapioca starch was prepared from 2297 g tapioca starch and 2819 g demineralized water.

On 2 kg dry matter (= 22 Baume = 39.9% d.s) at 45°C, 9.25% of HCl was added (= 500 g of 37% solution). The reaction was continued for 6 hours.

Neutralization was done with NaOH (10%) until pH 5 was reached.

The product (L5) was filtered on Buchner filter. The starch cake is re-slurried with water to wash the starch, filtered again and dried to a moisture content of about 13%.

The product was characterized by Brabender viscograph (see figure 1).

### Example 3 (not part of the invention)

### Preparation of acid-thinned potato starch.

A 39% starch slurry of potato starch was prepared from 2503 g potato starch and 2613 g demineralized water.

At 50°C, 6% of HCl was added (= 324.3 g of 37% solution). The reaction was continued for 6 hours.

Neutralization was done with NaOH (10%) until pH 5 was reached.

The product (L1) was filtered on Buchner filter. The starch cake is re-slurried with water to wash the starch, filtered again and dried to a moisture content of about 19%.

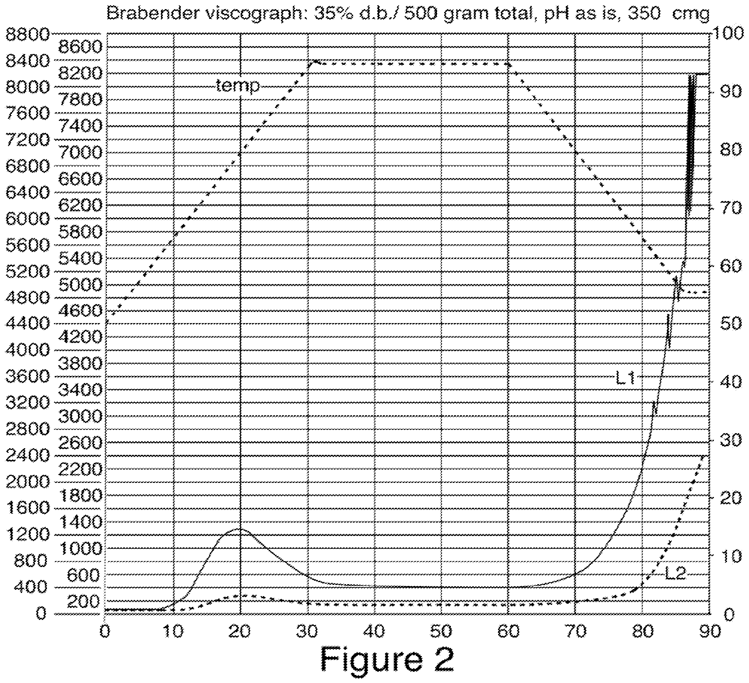

The product was characterized by Brabender viscograph (see figure 2).

### Example 4 (not part of the invention)

### Preparation of acid-thinned potato starch.

A 39% starch slurry of potato starch was prepared from 2503 g potato starch and 2613 g demineralized water.

At 50°C, 8% of HCl was added (= 432 g of 37% solution). The reaction was continued for 6 hours.

Neutralization was done with NaOH (10%) until pH 5 was reached.

The product (L2) was filtered on Buchner filter. The starch cake is re-slurried with water to wash the starch, filtered again and dried to a moisture content of about 19%.

The product was characterized by Brabender viscograph (see figure 2).

### Example 5 (not part of the invention)

### Preparation procedure of acid thinned corn starch

A 39% starch slurry of corn starch was prepared from 2514 g regular corn starch and 3114 g demineralised water. On 2 kg dry matter at 52°C, 4 % HCL was added (= 238 g HCL 37%). The reaction was continued for 6 hours. Neutralization was done with NaOH(10%) until pH 5 was reached.

The product (L1) was filtered on Buchner filter. The starch cake is re-slurried with water to wash the starch, filtered again and dried to a moisture content of about 13%.

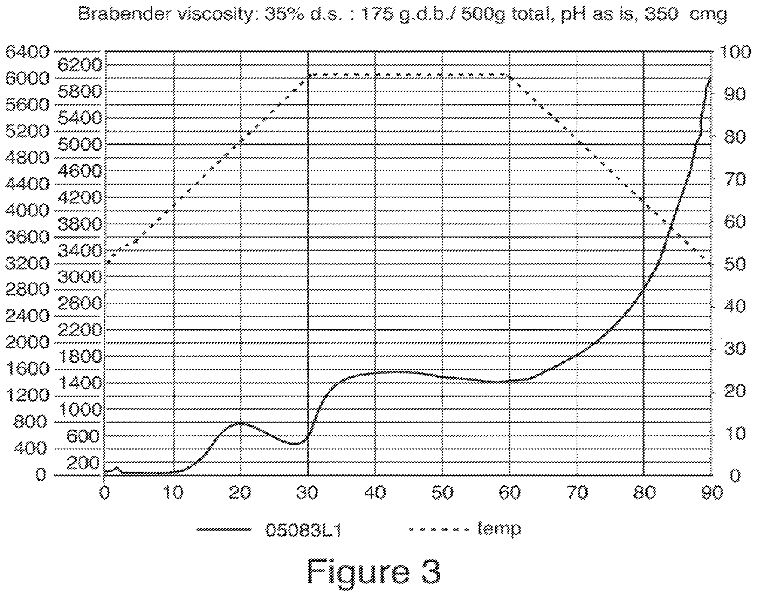

The product was characterized by Brabender viscograph (see figure 3).

### Example 6

### Preparation of confectionery gums

| Process conditions | Drying/cooling conditions | |
|---|---|---|
| make gelatin solution - keep at 60°C | Drying time | 4h |
| Heat up the glucose syrup to 65°C | Drying temperature | 60°C |
| add sugar and starch | Cooling time | 4h |
| Cook the mass to +/- 129°C | Cooling temperature | 25°C |
| Check the brix (80-82 after cooking | | |
| Add flavour, color and acid solution if appropriate. | | |
| Deposit the mass in the moulding starch (Moisture 5-7%) | | |
| - Temp = 95°C. | | |
| Dry the product in a drying cabinet | | |
| Cool the products and demould them. | | |
| Polish them with a polishing agent | | |

The drying time is 4 hours (while drying chambers are kept at 60°C and thus the temperature is already 60°C when the samples are entered), and the total setting time is 8 hours and satisfying confectionery gums are obtained .

**Recipe 1**

| | commercial base % |
|---|---|
| Water | 12.24 |
| acid-thinned tapioca starch | 17.14 |
| Glucose syrup | 45.66 |
| Sugar | 24.96 |
| | |
| | 100 |

**Recipe 2**

| | commercial base % |
|---|---|
| Water | 12.00 |
| acid-thinned tapioca starch | 12.20 |
| Gelatin 150 bl | 5.00 |
| Glucose syrup | 45.80 |
| Sugar | 25.00 |
| | |
| | 100 |

**Recipe 3 (not part of the invention)**

| | commercial base % |
|---|---|
| Water | 12.24 |
| acid-thinned potato starch | 17.14 |
| Glucose syrup | 45.66 |
| Sugar | 24.96 |
| | |
| | 100 |

**Recipe 4 (not part of the invention)**

| | commercial base % |
|---|---|
| Water | 12.00 |
| acid-thinned potato starch | 12.13 |
| Gelatin 150 bl | 5.10 |
| Glucose syrup | 45.77 |
| Sugar | 25.00 |
| | |
| | 100 |

## Claims

1. Use of acid-thinned tapioca starch for the preparation of confectionery gums **characterized in that** said starch has:
a. a Brabender peak viscosity of maximum 350 BU;
b. a Brabender hot paste viscosity at 95°C of maximum 250 BU; and
c. a Brabender end viscosity after cooling to 50°C of at least 1500 BU.

2. A quick-setting starch composition comprising acid-thinned tapioca starch **characterized in that** said starch has:
a. a Brabender peak viscosity of maximum 350 BU;
b. a Brabender hot paste viscosity at 95°C of maximum 250 BU; and
c. a Brabender end viscosity after cooling to 50°C of at least 1500 BU..

3. A process for producing confectionery gums comprising preparing a composition of acid-thinned tapioca starch and at least one sweetener at elevated temperature, moulding the product composition to obtain a gum and de-moulding the gum **characterized in that** said starch has:
a. a Brabender peak viscosity of maximum 350 BU;
b. a Brabender hot paste viscosity at 95°C of maximum 250 BU; and
c. a Brabender end viscosity after cooling to 50°C of at least 1500 BU..

4. The process according to claim 3 wherein the total setting time of moulding is less than 10 hours, preferably less than 9 hours.

5. A confectionery gum containing acid-thinned tapioca starch preferably in an amount of 5% to 25% w/w, more preferably in an amount of 10% to 20% w/w **characterized in that** said starch has:
a. a Brabender peak viscosity of maximum 350 BU;
b. a Brabender hot paste viscosity at 95°C of maximum 250 BU; and
c. a Brabender end viscosity after cooling to 50°C of at least 1500 BU..

6. The use according to claim 1, wherein said acid-thinned tapioca starch is used in the manufacture of confectionery gums for reducing the setting time of moulding.

## Patentansprüche

1. Verwendung von mit Säure verdünnter Tapiokastärke zur Zubereitung von Süßwarengummis, **dadurch gekennzeichnet, dass** die Stärke aufweist:
a. eine Brabender-Spitzenviskosität von maximal 350 BU;
b. eine Brabender-Heißpastenviskosität bei 95°C von maximal 250 BU; und
c. eine Brabender-Endviskosität nach einem Abkühlen auf 50°C von zumindest 1500 BU.

2. Schnellhärtende Stärkezusammensetzung, umfassend mit Säure verdünnte Tapiokastärke, **dadurch gekennzeichnet, dass** die Stärke aufweist:
a. eine Brabender-Spitzenviskosität von maximal 350 BU;
b. eine Brabender-Heißpastenviskosität bei 95°C von maximal 250 BU; und
c. eine Brabender-Endviskosität nach einem Abkühlen auf 50°C von zumindest 1500 BU.

3. Verfahren zum Herstellen von Süßwarengummis, umfassend Zubereiten einer Zusammensetzung von mit Säure verdünnter Tapiokastärke und zumindest einem Süßstoff bei erhöhter Temperatur, Formen der Produktzusammensetzung, um ein Gummi zu erhalten, und Entformen des Gummis, **dadurch gekennzeichnet, dass** die Stärke aufweist:
a. eine Brabender-Spitzenviskosität von maximal 350 BU;
b. eine Brabender-Heißpastenviskosität bei 95°C von maximal 250 BU; und
c. eine Brabender-Endviskosität nach einem Abkühlen auf 50°C von zumindest 1500 BU.

4. Verfahren nach Anspruch 3, wobei die gesamte Abbindezeit des Formens weniger als 10 Stunden, vorzugsweise weniger als 9 Stunden beträgt.

5. Süßwarengummi, enthaltend mit Säure verdünnte Tapiokastärke, vorzugsweise in einer Menge von 5% bis 25% w/w, bevorzugter in einer Menge von 10% bis 20% w/w, **dadurch gekennzeichnet, dass** die Stärke aufweist:
a. eine Brabender-Spitzenviskosität von maximal 350 BU;
b. eine Brabender-Heißpastenviskosität bei 95°C von maximal 250 BU; und
c. eine Brabender-Endviskosität nach einem Abkühlen auf 50°C von zumindest 1500 BU.

6. Verwendung nach Anspruch 1, wobei die mit Säure verdünnte Tapiokastärke bei der Herstellung von Süßwarengummis zum Verringern der Abbindezeit des Formens verwendet wird.

## Revendications

1. Utilisation d'un amidon de manioc aminci à l'acide pour la préparation de gommes de confiserie, **caractérisée en ce que** ledit amidon présente :
a. un pic de viscosité de Brabender de 350 BU au maximum ;
b. une viscosité de pâte chaude de Brabender à 95 °C de 250 BU au maximum ; et
c. une viscosité finale de Brabender après refroidissement à 50 °C d'au moins 1500 BU.

2. Composition d'amidon à gélification rapide comprenant de l'amidon de manioc aminci à l'acide, **caractérisée en ce que** ledit amidon présente :
a. un pic de viscosité de Brabender de 350 BU au maximum ;
b. une viscosité de pâte chaude de Brabender à 95 °C de 250 BU au maximum ; et
c. une viscosité finale de Brabender après refroidissement à 50 °C d'au moins 1500 BU.

3. Procédé de production de gommes de confiserie comprenant la préparation d'une composition d'amidon de manioc aminci à l'acide et d'au moins un édulcorant à température élevée, le moulage de la composition de produit pour obtenir une gomme et le démoulage de la gomme, **caractérisé en ce que** ledit amidon présente :
a. un pic de viscosité de Brabender de 350 BU au maximum ;
b. une viscosité de pâte chaude de Brabender à 95 °C de 250 BU au maximum ; et
c. une viscosité finale de Brabender après refroidissement à 50 °C d'au moins 1500 BU.

4. Procédé selon la revendication 3, dans lequel le temps de gélification total de moulage est inférieur à 10 heures, de préférence inférieur à 9 heures.

5. Gomme de confiserie contenant de l'amidon de manioc aminci à l'acide, de préférence dans une quantité de 5 % à 25 % p/p, de manière davantage préférée dans une quantité de 10 % à 20 % p/p, **caractérisée en ce que** ledit amidon présente :
a. un pic de viscosité de Brabender de 350 BU au maximum ;
b. une viscosité de pâte chaude de Brabender à 95 °C de 250 BU au maximum ; et
c. une viscosité finale de Brabender après refroidissement à 50 °C d'au moins 1500 BU.

6. Utilisation selon la revendication 1, dans laquelle ledit amidon de manioc aminci à l'acide est utilisé pour la fabrication de gommes de confiserie pour réduire le temps de gélification de moulage.
